# EUROPEAN PATENT APPLICATION

(11) **EP 1 081 644 A2**
(43) Date of publication of application: **07.03.2001**
(21) Application number: 00119207.9
(22) Date of filing: 05.09.2000
(51) Int. Cl.: G06T 1/00

(54) **Image display unit**

(30) Priority: 06.09.1999 JP 25231899
(71) Applicant: MATSUSHITA ELECTRIC INDUSTRIAL CO., LTD., Kadoma-shi, Osaka-fu 571-8501 (JP)
(72) Inventor: Ueno, Takafumi, Nara-shi, Nara 631-0001 (JP)
(74) Representative: Grünecker, Kinkeldey, Stockmair & Schwanhäusser Anwaltssozietät

(57) **Abstract**

An image display unit has
a main window for displaying images;
a three dimensional multi-window which has three dimensional data, wherein two dimensional image data are mapped in a three dimensional space of which the three dimensional data are able to be displayed in a two dimensional screen, and which has a plurality of display cells;
a pointing device indicating one or a plurality of said display cells within said three dimensional multi-window based on an input from the outside; and
a control means for displaying image data corresponding to one or a plurality of said display cells indicated by said pointing device on said main window.

## Description

### BACKGROUD OF THE INVENTION

### 1. Field Of The Invention

The present invention relates to an image display unit such as a personal computer which receives a digital broadcast signal multiplexing the compressed animated image and program information and which decodes the selected animated image to be displayed.

### 2. Related Art of the Invention

In a unit which digitizes the programs of TV broadcast so as to display the animated images on a personal computer, program guide information is normally used. This program guide information or the animated images are displayed on a multi-window of two dimensional display. This multi-window of the two dimensional display is a multi-window wherein the display screen is divided into a plurality of two dimensional display cells so as to display the contents (program guide information or animated images) of respective channels of digital broadcasting on the respective display cells.

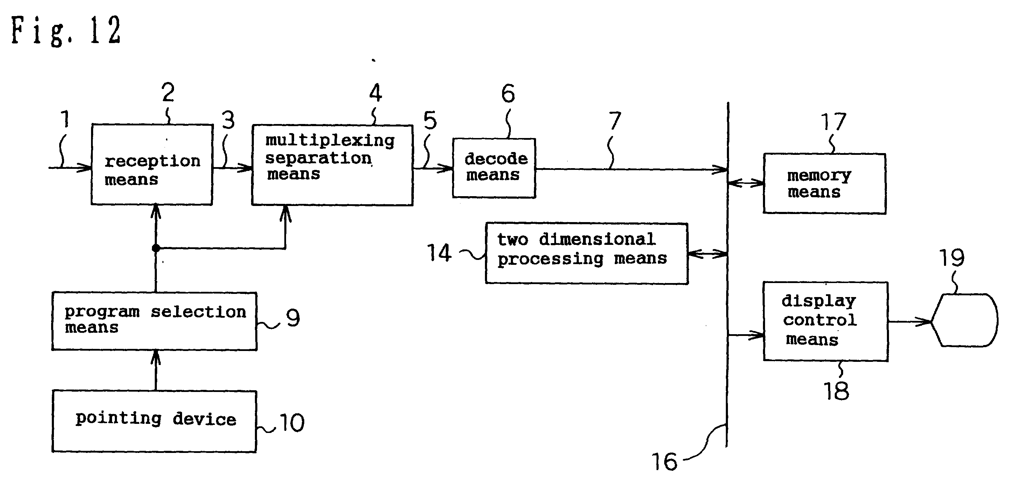

Fig 12 is a block diagram showing a conventional image display unit, which is in the case of receiving digital broadcasts. In this case, an MPEG-2 based multiplexing stream (ISO13818-1) wherein a compressed digital video stream (ISO13818-2) based on MPEG-2 is multiplexed is received.

In Fig 12, an input high frequency signal is denoted as 1, a reception means is denoted as 2, a multiplexing stream is denoted as 3, a multiplexing separation means which samples a video stream with a predetermined program number designated by the program selection means 9 from the multiplexing stream 3 is denoted as 4, a video stream is denoted as 5, a decode means for decoding the video stream 5 is denoted as 6, a decoded digital video is denoted as 7, a program selection means for designating a program number to select a program is denoted as 9, a bus is denoted as 16, a memory means is denoted as 17, a display control means is denoted as 18 and a display is denoted as 19.

With respect to the image display unit according to a prior art which is constructed in the above, the operation thereof is described in the following. In Fig 12, a program designated by the program selection means 9 is selected by the reception means 2 and the multiplexing separation means 4 from the received high frequency signal 1 so that the video stream 5 is gained. The digital video 7 is stored in the memory means 17 passing through the bus 16. The display control means 18 displays the digital video 7 stored in the memory means 17 on the display 19 screen.

In the prior art, however, the animated images and the program guide information are essentially two dimensional data, which are displayed two dimensionally on each display cell of the two dimensional multi-window, and therefore, the multi-window cannot be rotated nor can the pictures thereon.

### SUMMARY OF THE INVENTION

Considering the above described problems when a plurality of images are displayed on a multi-window, it is the purpose of the present invention to provide an image display unit or the like which can rotate each of the images.

An image display unit of the present invention comprises:
a main window for displaying images;
a three dimensional multi-window which has three dimensional data, wherein two dimensional image data are mapped in a three dimensional space of which the three dimensional data are able to be displayed in a two dimensional screen, and which has a plurality of display cells;
a pointing device indicating one or a plurality of said display cells within said three dimensional multi-window based on an input from the outside; and
a control means for displaying image data corresponding to one or a plurality of said display cells indicated by said pointing device on said main window.

A medium of the present invention contains a program and/or data for making a computer implement the entire, or part of, functions of the entire, or part of, means of an image display unit according to any present invention characterized by being able to be processed by computer.

An information assembly of the present invention is characterized by being a program and/or data for making a computer implement the entire, or part of, functions of the entire, or part of, means of an image display unit according to any present ivention.

### BRIED DESCRIPTION OF THE DRAWISNGS

Fig 1 is a block diagram showing a schematic configuration of an image display unit according to Embodiment 1 of the present invention;
Fig 2 is a diagram showing window processing of the image display unit according to Embodiment 1 of the present invention;
Fig 3 is a diagram showing a three dimensional window according to Embodiment 1 of the present invention;
Fig 4 is a block diagram showing a schematic configuration of an image display unit according to Embodiment 2 of the present invention;
Fig 5 is a diagram showing window processing of the image display unit according to Embodiment 2 of the present invention;
Fig 6 is a diagram showing window processing of the image display unit according to Embodiment 3 of the present invention;
Fig 7 is a block diagram showing a schematic configuration of an image display unit according to Embodiment 4 of the present invention;
Fig 8 is a block diagram showing a schematic configuration of an image display unit according to Embodiment 5 of the present invention;
Fig 9 is a diagram showing a header configuration of a compressed video stream according to Embodiment 5 of the present invention;
Fig 10 is a block diagram showing a process flow of the second auxiliary decode means according to Embodiment 5 of the present invention;
Fig 11 is a diagram showing the arrangement of the compressed video stream according to Embodiment 5 of the present invention ; and
Fig 12 is a configuration diagram according to a prior art.

### [Explanations of the Numerals]

- 4: multiplexing separation means
- 6: decode means
- 9: program selection means
- 10: pointing device
- 12: program image memory means
- 14: two dimensional processing means
- 15: three dimensional processing means
- 18: display control means
- 52: first three dimensional object
- 54: first frame buffer
- 55: second frame buffer
- 56: main window
- 57: first three dimensional multi-window

### PREFERRED EMBODIMENTS OF THE INVENTION

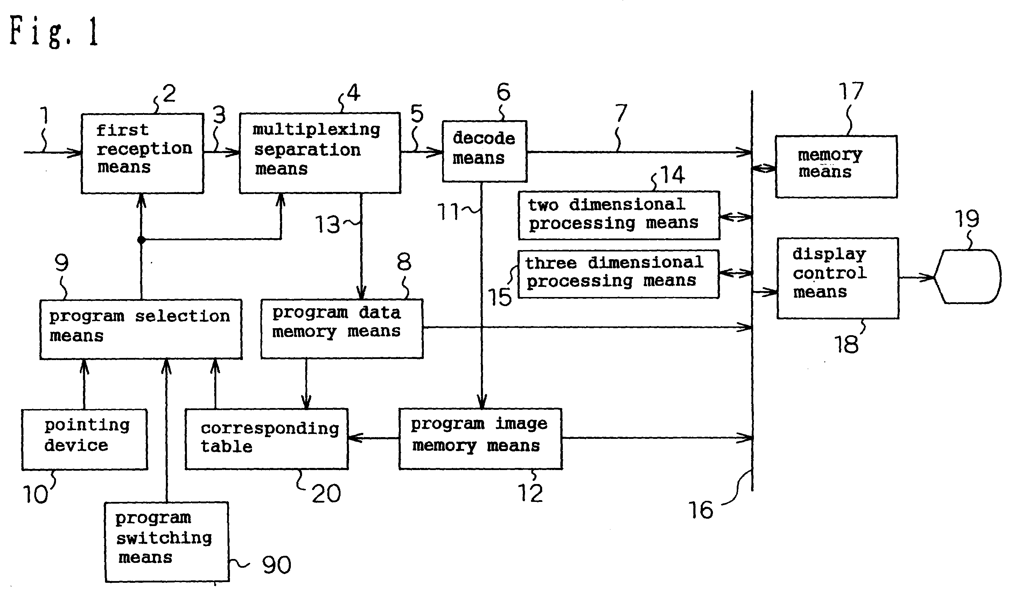

The modes according to the present invention are described with reference to Figs 1 to 6 in the following.

### (Embodiment 1)

Fig 1 is a block diagram showing an image display unit according to Embodiment 1 of the present invention, which is in the case of receiving digital broadcasts. In this case, an MPEG-2 based multiplexing stream (ISO1388-1) wherein a digital compressed video signal (ISO13818-2) based on MPEG-2 is multiplexed is received.

In Fig 1, each of the configuration means 1 to 7, 9, 16 to 19 is the same as the corresponding means in the prior art as shown in Fig 12, and a program data memory means for storing program data 13 outputted from the multiplexing separation means 4 is denoted as 8 , a pointing device for designating locations on the screen of the display 19 is denoted as 10, a program image is denoted as 11 and a program image memory means for taking in the program image 11 from the decode means 6 to be stored is denoted as 12.

Program data is denoted as 13, a two dimensional processing means for attaching data such as a program image 11 or program data 13 to a two dimensional object is denoted as 14, a three dimensional processing means for attaching a program image 11 to a three dimensional object is denoted as 15 and the first corresponding table for making program data 13 correspond to a program image 11 is denoted as 20.

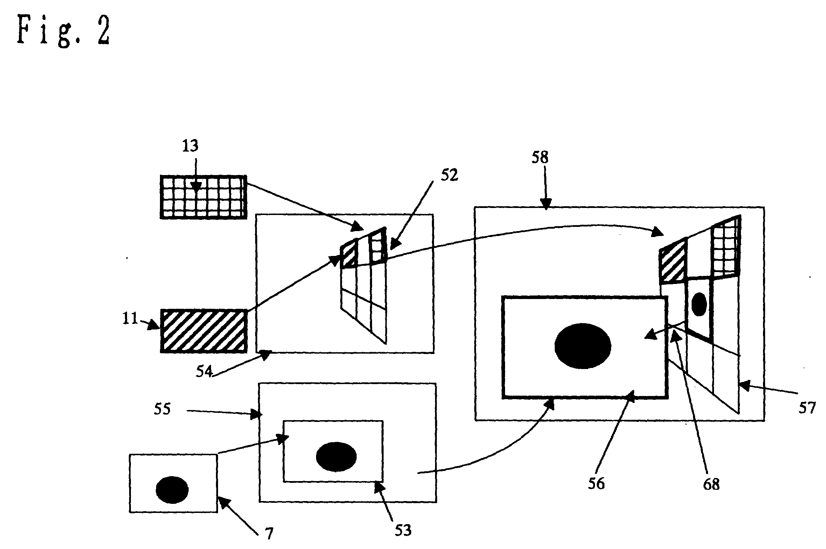

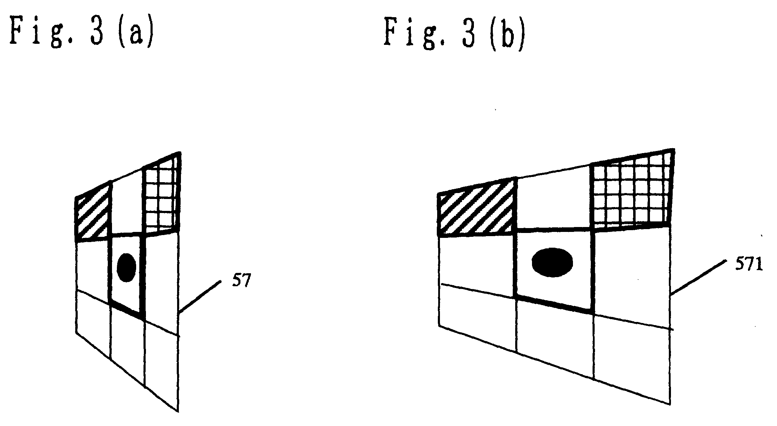

In addition, in Fig 2, the first three dimensional object is denoted as 52, a two dimensional object is denoted as 53, the first frame buffer in the memory means 17 for storing the three dimensional object 52 to which the program image 11 is attached is denoted as 54, the second frame buffer in the memory means 17 for storing the digital video 7 is denoted as 55, the main window is denoted as 56, the first three dimensional multi-window is denoted as 57, the screen of the display 19 is denoted as 58, the selection from the first three dimensional multi-window 57 is denoted as 68 and a program switching means is denoted as 90. In Fig 3, the third multi-window which is the first three dimensional multi-window displayed in a different perspective view is denoted as 571.

With respect to the image display unit according to the present embodiment which is constructed in the above, the operation thereof is described in the following.

In Fig 1 and 2, a program designated by the program selection means 9 from the received high frequency signal 1 is selected by the reception means 2 so that a multiplexing stream 3 based on MPEG-2 (ISO13818-1) is inputted to the multiplexing separation means 4 so as to be selected by the multiplexing separation means 4 to gain a video stream 5 based on MPEG-2 (ISO13818-2). And at the same time, the program data 13 are stored in the program data memory means 8. The first example of this piece of program data 13 is program guide information showing the schedule or the contents of the program. The second example of the program data 13 is data attached to a program such as for broadcasting with captions on the screen. The third example of the program data 13 is still image data. The digital video 7 is stored in the memory means 17 after passing through the bus 16. In Fig 2, the digital video 7 is stored in the second frame buffer 55 in the memory means 17.

The program switching means 90 switches programs in sequence and the program image 11 for each program outputted from the decode means 6 is stored in the program image memory means 12. The program image 11 and the program data 13 are embodiment to correspond by the first corresponding table 20. For example, information is described in the corresponding table 20 indicating to which program the identification number of the program image stored in the program image memory means 12 corresponds in the case that the program data 13 are a program guide.

The program image 11 is attached to the three dimensional object by the three dimensional processing means 15. The three dimensional object has a plurality of display cells partitioned in the mesh of a net so that each of the display cells can display separate program data 13 or the program image 11. In Fig 2, the program image 11 is attached to the three dimensional object 52 so as to be stored in the first frame buffer 54 of the memory means 17.

The digital video 7 is attached to the two dimensional object 53 by the two dimensional processing means 14 so as to be stored in the second frame buffer 55 of the memory means 17.

The display control means 18 carries out flipping between the main window 56 and the first three dimensional multi-window 57 on the screen 58 of the display 19, that is to say, in the case that the first three dimensional multi-window 57 is displayed, an address is switched so as to show the first three dimensional object 52 of the first frame buffer 54 and in the case of displaying the main window 56, the display is carried out by switching to the address showing the digital video 7 of the second frame buffer 55.

Since the contents of a program can be seen by viewing the first three dimensional multi-window 57, instructions for receiving a predetermined program via the pointing device 10 and the program selection means 9 are issued to the first reception means. Thereby, a predetermined digital video 7 is displayed on the main window 56 as animated images. In this case, while being displayed in the main window 56, the image of the first three dimensional multi-window 57 stands still, which does not cause a large problem since the purpose of grasping the program contents visually is achieved.

In Fig 3, when the focus of the perspective display of the three dimensional object, to which the first multi-window 57 is attached, is changed, the angle can be changed as in the third multi-window 571 so as to make it possible to expand or contract freely according to the blank area on the screen 58 of the display 19.

As an example of the above described pointing device 10, a mouse may be used or a remote control unit may be used. And instead of directly indicating on the screen 58, a keyboard may be used which receives, from the outside, the coordinates on the screen 58 or indications of a display cell.

The angle of the first three dimensional multi-window 57 can also be changed if the angle of the three dimensional object 52 is changed.

In Fig 3, when the focus of the perspective display of the three dimensional object, to which the first multi-window 57 is attached, is changed, the angle can be changed as in the third multi-window 571 so as to make it possible to expand or contract freely according to the blank area on the screen 58 of the display 19.

A program existing in the program data memory means 8 or the program image memory means 12 can be designated by the program selection means 9 when the designated file is related to it through the first corresponding table 20 by making the pointing device 10 indicate a display cell corresponding to a selected program among the display cells of the first three dimension multi-window 57.

### (Embodiment 2)

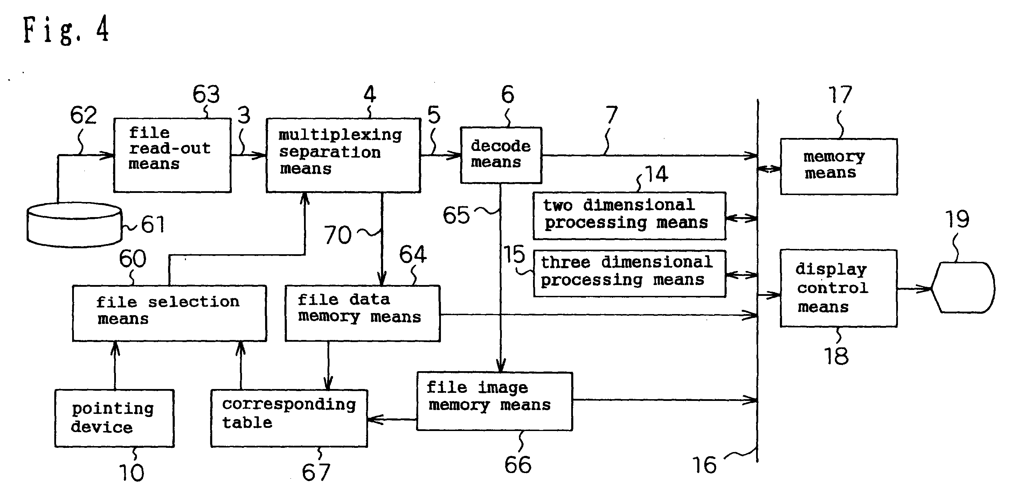

Fig 4 is a block diagram showing an image display unit according to Embodiment 2 of the present invention, which is a diagram showing the case where an image file is read out from the hard disc.

In Fig 4, each of the configuration means 3 to 7, 9 and 16 to 19 are the same as that in the prior art shown in Fig 12 and each of the means 10, 14 and 15 is the same as corresponding means of the image display unit in Embodiment 1 according to the present invention described in reference to Fig 1 and a program selection means is denoted as 60, a hard disc is denoted as 61, a multiplexing stream read out from the hard disc 61 is denoted as 62, a file read-out means for reading out an image file from the hard disc 61 is denoted as 63, a file image is denoted as 65, a file image memory means is denoted as 66, file data are denoted as 70, a file data memory means is denoted as 64 and the second corresponding table for making the file data 70 correspond to the file image 65 is denoted as 67.

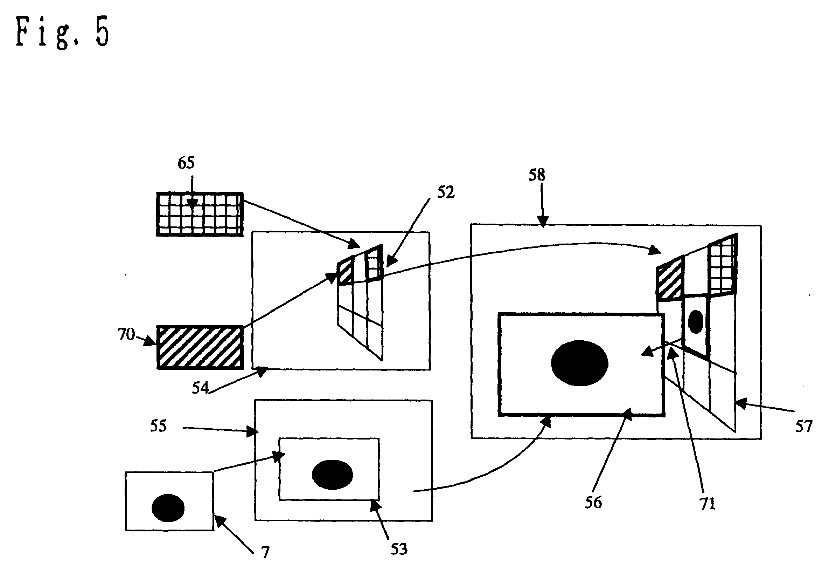

In Fig 5 the numerals 52 and 54 to 58 refer to the same things described in Embodiment 1 according to the present invention as shown in Fig 2 and a choice from the things displayed on the first three dimensional multi-window 57 is denoted as 71.

The operation with respect to the image display unit in the present embodiment which is formed in the above is described in the following.

In Figs 4 and 5, the multiplexing stream 62 is read out from the hard disc 61 by means of the file read-out means 63 and the multiplexing separation means 4 selects the file designated by the file selection means 60 to gain the video stream 5. In addition, at the same time the file data 70 are stored in the file data memory means 64. The digital video 7 is stored in the memory means 17 after passing through the bus 17. In Fig 2, the digital video 7 is stored in the second frame buffer 55 in the memory means 17.

A group of files within the hard disc are decoded in sequence so that the file image 65 outputted from the decode means 6 is stored in the file image memory means 66. The file image 65 and the film data 70 are embodiment to correspond by the second corresponding table 20. For example, contained in the corresponding table 67 is the following information: which file identifier in a directory the identification number of the file image 65, stored in the file image memory means 66, corresponds to in the case that the file data 70 are the directory data.

The file image 65 is attached to the three dimensional object by the three dimensional processing means 15. The three dimensional object has a plurality of display cells partitioned in the mesh of a net wherein separate pieces of file data 13 or file images 11 can be displayed in each display cell. In Fig 4, the file image 65 is attached to the three dimensional object 52 so as to be stored in the first frame buffer 54 of the memory means 17.

The display control means 18 carries out flipping between the main window 56 and the first three dimensional multi-window 57 on the screen 58 of the display 19, that is to say, in the case that the first three dimensional multi-window 57 is displayed, an address is switched so as to show the first three dimensional object 52 of the first frame buffer 54 and in the case of displaying the main window 56, the display is carried out by switching to the address showing the digital video 7 of the second frame buffer 55.

Since the contents of a file can be seen by viewing the first three dimensional multi-window 57, instructions for receiving a predetermined program via the pointing device 10 and the program selection means 9 are issued to the first reception means. Thereby, a predetermined digital video 7 is displayed on the main window 56 as animated images. In this case, while being displayed in the main window 56, the image of the first three dimensional multi-window 57 stands still, which does not cause a large problem since the purpose of grasping the program contents visually is achieved, which is in the same manner as Embodiment 1.

### (Embodiment 3)

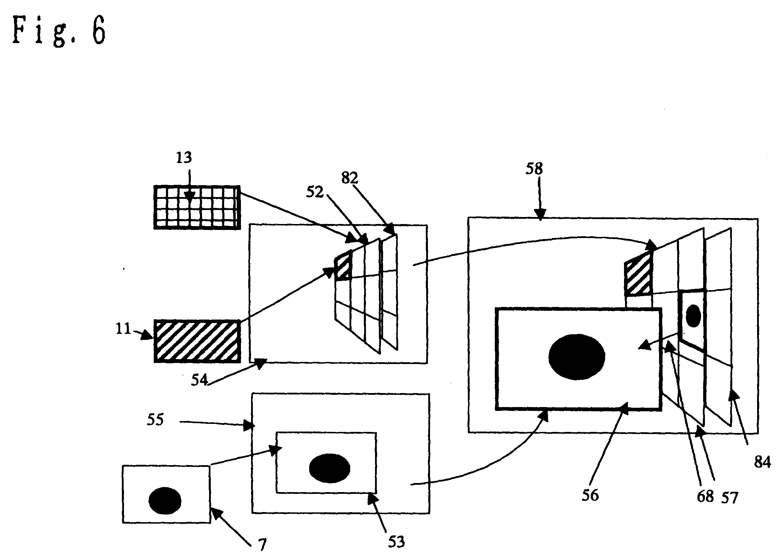

Fig 6 shows a diagram for describing an image display unit according to Embodiment 3 of the present invention.

The image display unit according to Embodiment 3 is essentially the same as the image display unit according to Embodiment 1 described in reference to Figs 1 and 2 and is different in the point where a plurality of three dimensional multi-windows are displayed as shown in Fig 6.

In Fig 6 the numerals 52 and 54 to 58 refer to the same things described in Embodiment 1 according to the present invention as shown in Fig 2. The second three dimensional object is denoted as 82 and the second three dimensional multi-window is denoted as 84. The program image attached to the first three dimensional object 52 is displayed as the first three dimensional multi-window 57 and the program image attached to the second three dimensional object 82 is displayed as the second three dimensional multi-window 84.

In addition, the display order of the first three dimensional multi-window 57 and the second three dimensional multi-window 84 can be changed by indicating the first three dimensional multi-window 57 or the second three dimensional multi-window 84 by the pointing device. Other operations are the same as the operations of the image display unit according to Embodiment 1 of the present invention.

### (Embodiment 4)

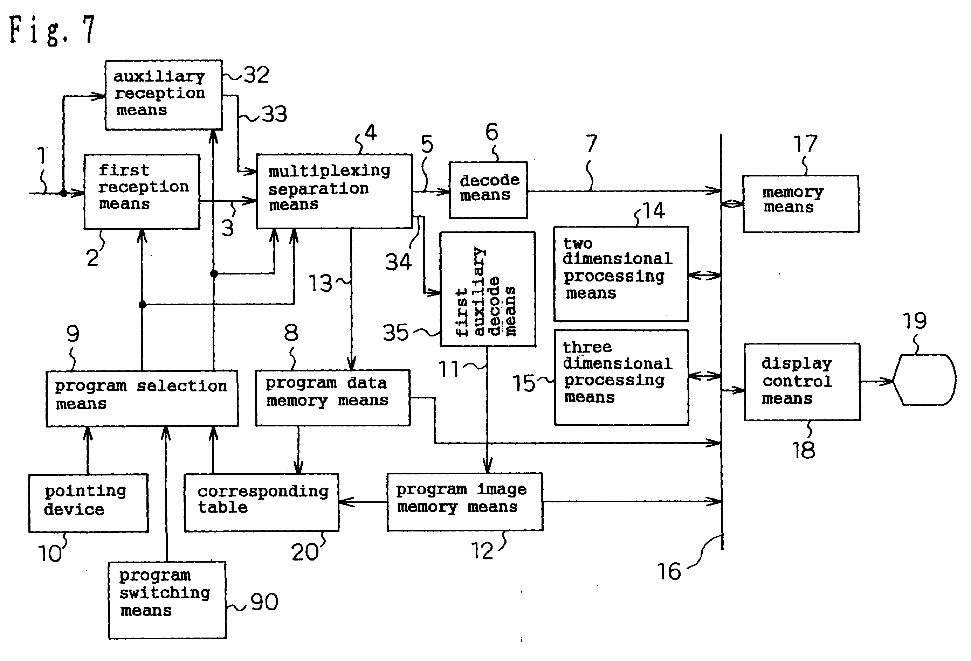

Fig 7 is a block diagram showing an image display unit in Embodiment 4 according to the present invention, which is the case of receiving digital broadcasts.

In Fig 7 an auxiliary reception means is denoted as 32, a multiplexing stream outputted from the auxiliary reception means 32 is denoted as 33, an auxiliary video stream based on MPEG-2 outputted from the multiplexing separation means 4 is denoted as 34, the first auxiliary decode means based on MPEG-2 is denoted as 35, a program image outputted from the auxiliary decode means 34 is denoted as 36 and the remaining parts are the same as in Embodiment 1.

With respect to the image display unit in the present embodiment which is formed in the above, the operation is described in reference to Figs 7 and 2. In Fig 7 a program designated by the program selection means 9 from the received high frequency signal 1 is selected by the reception means 2, the multiplexing stream 3 is supplied to the multiplexing separation means 4, the video stream 5 corresponding to a predetermined program number is gained by the multiplexing separation means 4 and the digital video 7 shown in Fig 7 is stored in the second frame buffer 55 in the memory means 17 after being decoded by the decode means 6. The digital video 7 is attached to the two dimensional object 53 in Fig 2 by the two dimensional processing means 14 so as to be stored in the second frame buffer of the memory means 17.

The program data 13 are stored in the program data memory means 8. The first example of this piece of program data 13 is program guide information showing a schedule or the contents of a program. The second example of the program data is the data attached to a program such as a broadcast with sub-titles on the screen. The third example of the program data is still image data.

On the other hand, the program designated by the program selection means 9 from the received high frequency signal 1 is selected by the auxiliary reception means 32, the multiplexing stream 33 is supplied to the multiplexing separation means 4, the auxiliary video steam 34 outputted from the multiplexing separation means 4 is added to the first auxiliary decode means 35, a program image 11 corresponding to a predetermined program number is gained to be stored in the program image memory means 12.

The program image 36 and the program data 13 are embodiment to correspond by the first corresponding table 20. For example, based on the program guide information stored in the program data memory means 8 and the program image 11 stored in the program image memory means 12, contained in the corresponding table 20 is the following information:

which program the program image stored in the program image memory means 12 corresponds to. If the program data are the data attached to a program, for example caption data, the identification number of the program image and the identification number of the caption data are embodiment to correspond so as to be contained in the first corresponding table 20.

In this case, since the program switching means 90 switches the program received periodically for reception means 32 and the multiplexing separation means 4, the program image 11 stored in the program image means 12 is periodically updated.

The program data 13 and the program image 36 are attached to the three dimensional object by means of the three dimensional processing means 15. The three dimensional object has a plurality of display cells partitioned in the mesh of a net, wherein separated pieces of program data 13 or program images 11 can be displayed in each display cell. In Fig 2, the program image 11 and the program data 13 are attached to the three dimensional object 52 so as to be stored in the first frame buffer 54 of the memory means 17.

The display control means 18 carries out flipping between the main window 56 and the first three dimensional multi-window 57 on the display screen, that is to say, in the case that the first three dimensional multi-window 57 is displayed, an address is switched so as to show the first three dimensional object of the first frame buffer 54 and in the case of displaying the main window 56, the display is carried out by switching to the address showing the digital video 7 of the second frame buffer 55.

In addition, as for the above described pointing device 10, a mouse may be used or a remote control unit may be used. Or it may be a key input without directly indicating on the screen 58.

The angle of the three dimensional object 52 can be changed so that the angle of the first three dimensional multi-window can be changed.

As described above, it becomes possible to display a designated program on the main window 56 by indicating a program on the first three dimensional multi-window 57, which is sequentially updated, by the pointing device 10.

### (Embodiment 5)

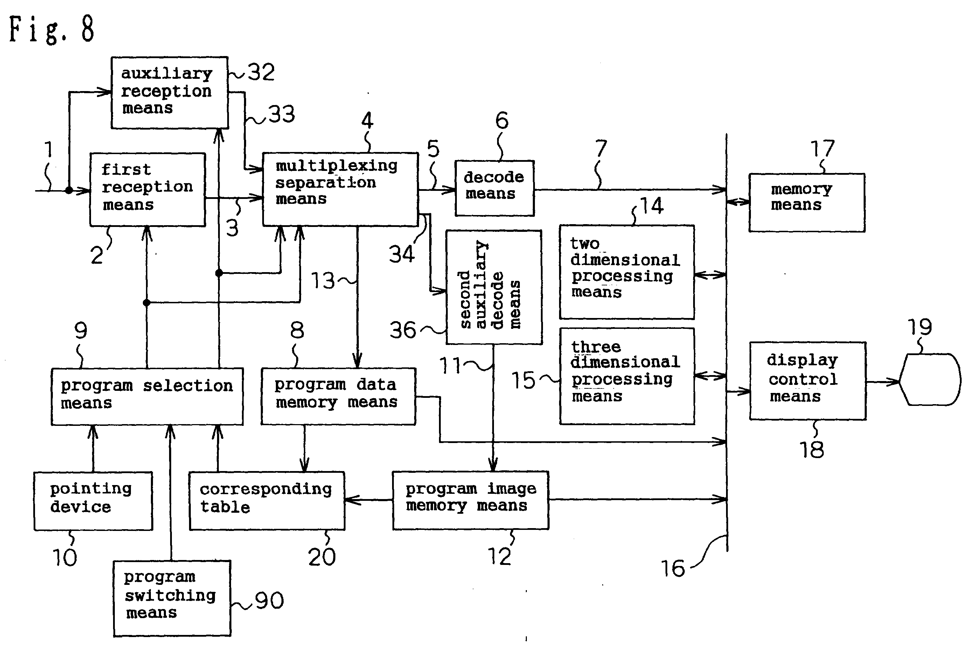

Fig 8 is a block diagram showing an image display unit according to Embodiment 5 of the present invention, which is an embodiment which reduces the burden of the decode processing of the image displayed on the three dimensional multi-window in the case of receiving digital broadcasts.

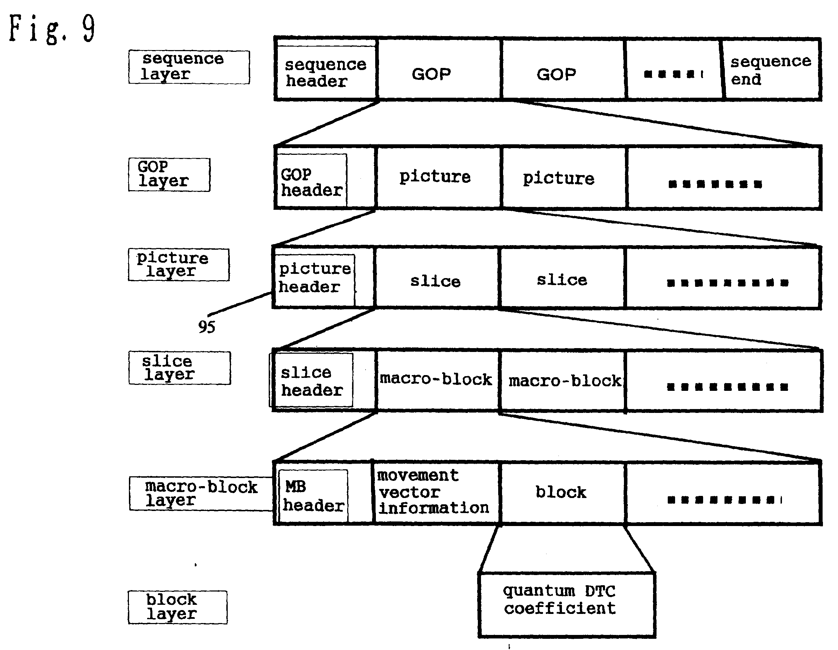

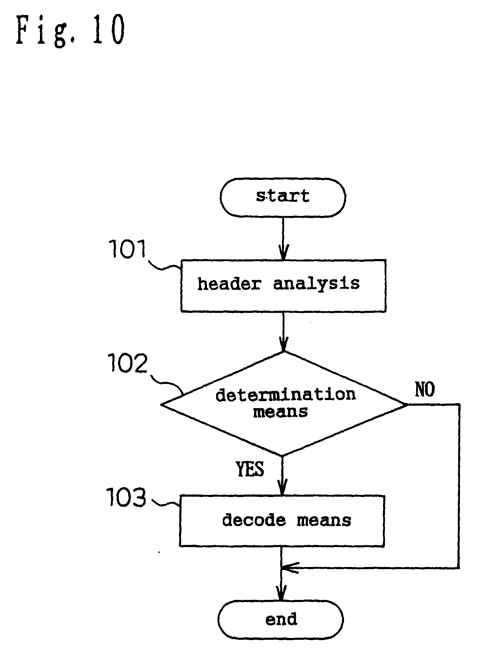

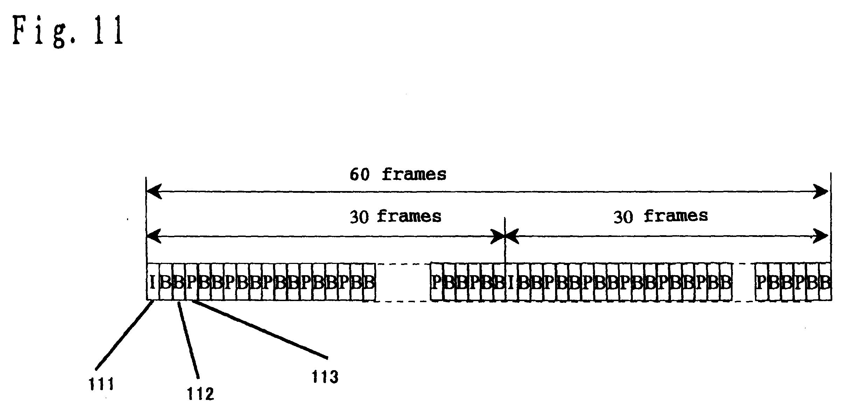

In Fig 8, the second auxiliary decode means is denoted as 36. Fig 9 is a diagram showing the configuration of the data coded according to MPEG-2 and a picture header is denoted as 95. Fig 10 is a diagram showing a process of the second auxiliary decode means 36 and a header analysis is denoted as 101, determination of whether or not it is an I picture is denoted as 102 and a decode processing is denoted as 103. Fig 11 is a diagram showing the configuration of the data coded, per second, according to MPEG-2 which is herein formed of 60 frames per second, 30 frames per GOP (Group Of Pictures) and an I picture (Intra coded image) is denoted as 111, a B picture (Bidirectionally predictive coded image) is denoted as 112 and a P picture (Predictive coded image) is denoted as 113. The remaining parts are the same as in Embodiment 4.

With respect to an image display unit according to the present embodiment which is formed in the above, the operation is described in reference to Figs 8 to 11 and 2. In Fig 8, the program designated by the program selection means 9 from the received high frequency signal 1 is selected by the reception means 2, the multiplexing stream 3 is supplied to the multiplexing separation means 4, the video stream 5 corresponding to a predetermined program number is gained by the multiplexing separation means 4 and the digital video 7 shown in Fig 8 is stored in the second frame buffer 55 in the memory means 17 after being decoded by the decode means 6. The digital video 7 is attached to the two dimensional object 53 in Fig 2 by the two dimensional processing means 14 so as to be stored in the second frame buffer of the memory means 17.

On the other hand, the program designated by the program selection means 9 from the received high frequency signal 1 is selected by the auxiliary reception means 32, the multiplexing stream 33 is supplied to the multiplexing separation means 4, the auxiliary video steam 34 outputted from the multiplexing separation means 4 is added to the second auxiliary decode means 35. In Fig 9 whether one frame of the MPEG-2 coding is an I picture, a P picture or a B picture is described in the picture header.

In Fig 10 a picture header is analyzed in the header analysis 101, whether or not it is an I picture is determined in the determination means 102 so that if it is an I picture it is decoded in the decode process 103 and if it is other than the I picture it is not decoded. Thereby, the decode process of the second auxiliary decode means 36 is simplified. Though by decoding only I pictures, the images displayed on the three dimensional multi-window become frame sampling, it doesn't cause any interference with the determination of the contents.

The program image 11 corresponding to a predetermined program number is stored in the program image memory means 12.

As described above, it becomes possible to display the designated program on the main window 56 by indicating a program on the first three dimensional multi-window 57 which is sequentially updated by means of the pointing device 10 and, in addition, it becomes possible to implement the reduction of the processing ability of the second auxiliary decode means 36.

Here, it is, of course, possible to implement, by software, the program selection means 9, the program data memory means 8, the program image memory means 12, in the above described modes and the program selection means 60, the file data memory means 64 and the file image memory means 66 in the above described embodiment 2.

In addition, the configuration of the image display unit in each of the above described modes may be implemented by software or may be implemented by hardware.

Moreover, the present invention relates to a medium containing a program and/or data for making a computer implement the entire, or part of, functions of the image display unit in each of the above described modes, which is a medium having said program and/or data readable by computer and after being read works with the computer to implement the above described functions.

The present invention is releted to an information assembly characterized by being a program and/or data for making a computer implement the entire, or part of, functions of the entire, or part of, means of an image display unit according to the above mentioned present inventions.

Data include data structure, data format and data types or the like.

The medium includes a recording medium such as a ROM, a transmission medium such as the Internet and a transmission medium such as light, electromagnetic waves or sound waves.

The medium containing a program and/or data includes a recording medium which, for example, records a program and/or data or a transmission medium which transmits a program and/or data or the like.

Being able to be processed by computer includes being able to be read out by computer in the case of a recording medium such as a ROM and being able to be handled by computer as a result of transmission of a program and/or data as the transmission object in the case of a transmission medium.

Information assembly includes software such as a program and/or data.

As is clear from the above description, according to the present invention the image display can be changed by rotating, or the like, in accordance with the vacant area on the display and, therefore, the selection of the image from the three dimensional multi-window becomes easier.

In addition, since the main window can display by directly indicating a display cell of the three dimensional multi-window, the ease of operation can be enhanced.

According to the invention, an image display unit can be provided which displays a large amount of information on a small screen without creating an unnatural visual feeling to the user through the display of the data within each display cell within the three dimensional multi-window displayed on the screen by using the perspective method.

According to the present invention an image display unit can be provided which displays a large amount of information on a small screen by three dimensionally displaying the program guide gained by receiving digital broadcasts and which makes the program selection easier.

According to the present invention an image display unit can be provided which displays a large amount of information on a small screen by three dimensionally displaying the program image gained by receiving digital broadcasts and which makes the program selection easier.

According to the present invention in addition to the effects of the present invention described in Claims 1 to 4, the received program can be switched in sequence and, therefore, the newest program data and program images can be displayed on the three dimensional multi-window with one tuner.

According to the present invention in addition to the effects of the present invention described in Claims 1 to 4, the newest program data and program images can be displayed on the three dimensional multi-window and they can be displayed on the main window simultaneously.

According to the present invention in addition to the effects of the present invention described in Claims 1 to 4, the received program can be switched in sequence, and the newest program data and program images can be displayed on the three dimensional multi-window and they can be displayed on the main window simultaneously.

According to the present invention an image display unit for three dimensionally displaying a large amount of information on a small screen by displaying data attached to a program gained by receiving digital broadcasts can be provided.

According to the present invention an image display unit for displaying a large amount of information on a small screen by three dimensionally displaying directory data gained by reading out a file from the image file and for making the file selection easier can be provided.

According to the present invention an image display unit for displaying a large amount of information on a small screen by three dimensionally displaying file images gained by reading out a file from the image file and for making the file selection easier can be provided.

According to the present invention in addition to the effects of the present invention described above, the displayed file can be switched in sequence ,and the newest program data and program images can be displayed on the three dimensional multi-window and they can be displayed on the main window simultaneously.

According to the present invention in addition to the effects of the present invention described above, there is an advantage that the process efficiency is high since only the intra images are decoded and displayed.

According to the present invention an image display unit for displaying a large amount of information on a small screen by three dimensionally displaying data attached to a file gained by reading out a file from the image file can be provided.

According to the present invention in addition to the effects of the present invention described above, the display angle of the three dimensional multi-window can be changed and, therefore, an image display unit with greater flexibility of the display can be provided.

According to the present invention in addition to the effects of the present invention described above, a plurality of three dimensional multi-windows can be displayed and, therefore, an image display unit which displays a large amount of information can be provided.

According to the present invention in addition to the effects of the present invention described above, the order of overlapping of the three dimensional multi-windows can be changed and, therefore, an image display unit which can display necessary information in the front for easy viewing can be provided.

## Claims

1. An image display unit characterized by comprising:
a main window for displaying images;
a three dimensional multi-window which has three dimensional data, wherein two dimensional image data are mapped in a three dimensional space of which the three dimensional data are able to be displayed in a two dimensional screen, and which has a plurality of display cells;
a pointing device indicating one or a plurality of said display cells within said three dimensional multi-window based on an input from the outside; and
a control means for displaying image data corresponding to one or a plurality of said display cells indicated by said pointing device on said main window.

2. Art image display unit according to Claim 1, characterized in that said three dimensional multi-window is displayed in perspective and in that image data displayed in said display cells within said three dimensional multi-window are displayed in perspective.

3. An image display unit according to Claim 1, characterized by comprising:
a digital broadcast reception means for receiving digital broadcast data;
a program guide memory means for storing a program guide gained from said digital broadcast data received by said digital broadcast reception means; and
a program guide display means for displaying said program guide on said display cells of said three dimensional multi-window.

4. An image display unit according to Claim 1, characterized by comprising:
a digital broadcast reception means for receiving digital broadcast data;
a decode means for decoding a compressed video stream gained from said digital broadcast data received by said digital broadcast reception means;
a means for storing program images wherein said compressed video stream is decoded;
a means for displaying said program images on said display cells of said three dimensional multi-window; and
a means for receiving, by said digital broadcast reception means, a program corresponding to one or a plurality of display cells of said three dimensional multi-window in response to an input to said pointing device so as to be displayed on the main window.

5. An image display unit according to Claim 4, characterized by comprising a program switching means for sequentially switching received-programs so that animated images are displayed on either one of said main window or said three dimensional multi-window.

6. An image display unit according to Claim 1, characterized by comprising:
a digital broadcast reception means;
an auxiliary digital broadcast reception means;
a means for storing program images received by said auxiliary digital broadcast reception means;
a means for displaying said program images on a plurality of display cells of said three dimensional multi-window; and
a means for receiving, by said digital broadcast reception means, a program corresponding to one or a plurality of display cells of said three dimensional multi-window in response to an input to said pointing device so as to be displayed on said main window.

7. An image display unit according to Claim 6, characterized by comprising a program switching means for sequentially switching received programs so that animated images are displayed on said three dimensional multi-window and said main window.

8. An image display unit according to Claim 1, characterized by comprising:
a digital broadcast reception means for receiving digital broadcast data;
a memory means for data attached to a program which stores data attached to a program gained from said digital broadcast data received by said digital broadcast reception means; and
a display means for data attached to a program which displays said data attached to a program on said display cells of said three dimensional multi-window.

9. An image display unit according to Claim 1, characterized by comprising:
an image file memory means for storing image files;
an image file read-out means for reading out image files stored in said image file memory means;
a directory data memory means for storing directory data of the image files read out by said image file read-out means; and
a directory data display means for displaying said directory data on said display cells of said three dimensional multi-window.

10. An image display unit according to Claim 1, characterized by comprising:
an image file memory means for storing image files;
an image file read-out means for reading out image files stored in said image file memory means;
a decode means for decoding a compressed video stream read out by said image file read-out means;
a means for storing said decoded file image;
a means for displaying said file image on said display cells of said three dimensional multi-window; and
a means for reading out from said image file memory means, by said image file read-out means, a file corresponding to one or a plurality of display cells of said three dimensional multi-window in response to an input to said pointing device so as to be displayed on the main window.

11. An image display unit according to Claim 10, characterized by comprising a switching means for sequentially switching files read out so that animated images are displayed on said main window and said three dimensional multi-window.

12. An image display unit according to Claim 4, characterized by comprising an auxiliary decode means for decoding only intra coded images of said compressed video stream.

13. An image display unit according to Claim 6, characterized by comprising an auxiliary decode means for decoding only intra coded images of said compressed video stream.

14. An image display unit according to Claim 10, characterized by comprising an auxiliary decode means for decoding only intra coded images of said compressed video stream.

15. An image display unit according to Claim 1, characterized by comprising:
an image file memory means for storing image files;
an image file read-out means for reading out image files stored in said image file memory means;
a means for storing data attached to files of the image files read out by said image file read-out means;
a means for displaying said data attached to files on said display cells of said three dimensional multi-window; and
a means for reading out from said image file memory means, by said image file read-out means, a file corresponding to one or a plurality of display cells of said three dimensional multi-window in response to an input to said pointing device so as to be displayed on the main window.

16. An image display unit according to Claim 1, characterized in that the display angle of said three dimensional multi-window is changeable.

17. An image display unit according to Claim 1, characterized in that there are a plurality of planes of said three dimensional multi-windows.

18. An image display unit according to Claim 17, characterized in that the overlapping order of said plurality of planes of sadi three dimensional multi-windows is changeable.

19. An image display unit according to Claim 3 comprising a switching means for switching programs of said digital broadcast data received by said digital broadcast reception means, characterized in that said program guide, said program image or said data attached to programs of the programs switched by said switching means are displayed on said three dimensional multi-window.

20. An image display unit according to Claim 4 comprising a switching means for switching programs of said digital broadcast data received by said digital broadcast reception means, characterized in that said program guide, said program image or said data attached to programs of the programs switched by said switching means are displayed on said three dimensional multi-window.

21. An image display unit according to Claim 6 comprising a switching means for switching programs of said digital broadcast data received by said digital broadcast reception means, characterized in that said program guide, said program image or said data attached to programs of the programs switched by said switching means are displayed on said three dimensional multi-window.

22. An image display unit according to Claim 8 comprising a switching means for switching programs of said digital broadcast data received by said digital broadcast reception means, characterized in that said program guide, said program image or said data attached to programs of the programs switched by said switching means are displayed on said three dimensional multi-window.

23. An image display unit according to Claim 16 comprising a switching means for switching programs of said digital broadcast data received by said digital broadcast reception means, characterized in that said program guide, said program image or said data attached to programs of the programs switched by said switching means are displayed on said three dimensional multi-window.

24. An image display unit according to Claim 1, characterized in that said pointing device is a mouse.

25. An image display unit according to Claim 1, characterized in that said pointing device is a remote control device.

26. An image display unit according to Claim 1, characterized in that the display area and/or the size of said main window is changeable based on an indication inputted to said pointing device from the outside

27. A medium containing a program and/or data for making a computer implement the entire, or part of, functions of the entire, or part of, means of an image display unit according to any one of Claims 1 to 26, characterized by being able to be processed by computer.

28. An information assembly characterized by being a program and/or data for making a computer implement the entire, or part of, functions of the entire, or part of, means of an image display unit according to any one of Claims 1 to 26.
